(19) Europäisches Patentamt
European Patent Office
Office européen des brevets

(11) Veröffentlichungsnummer: **0 505 445 B1**

(12) **EUROPÄISCHE PATENTSCHRIFT**

(45) Veröffentlichungstag der Patentschrift: **17.11.94**

(51) Int. Cl.5: **C09D 5/44**, C09D 17/00, C08G 59/22, C08G 59/38

(21) Anmeldenummer: **91901281.5**

(22) Anmeldetag: **17.12.90**

(86) Internationale Anmeldenummer: **PCT/EP90/02211**

(87) Internationale Veröffentlichungsnummer: **WO 91/09917 (11.07.91 91/15)**

(54) **VERFAHREN ZUM BESCHICHTEN ELEKTRISCH LEITFÄHIGER SUBSTRATE, WÄSSRIGER LACK, EPOXID-AMINADDUKT UND VERWENDUNG DES EPOXID-AMINADDUKTES ALS REIBHARZ ZUR HERSTELLUNG VON PIGMENTPASTEN.**

(30) Priorität: **23.12.89 DE 3942766**

(43) Veröffentlichungstag der Anmeldung:
**30.09.92 Patentblatt 92/40**

(45) Bekanntmachung des Hinweises auf die Patenterteilung:
**17.11.94 Patentblatt 94/46**

(84) Benannte Vertragsstaaten:
**AT BE CH DE DK ES FR GB IT LI NL SE**

(56) Entgegenhaltungen:
**EP-A- 0 253 404**
**EP-A- 0 265 655**
**EP-A- 0 300 504**
**US-A- 3 936 405**

(73) Patentinhaber: **BASF Lacke + Farben AG**
**Glasuritstrasse 1**
**D-48165 Münster-Hiltrup (DE)**

(72) Erfinder: **OTT, Günther, Dr.**
**Von-Holte-Strasse 1c**
**D-4400 Münster (DE)**
Erfinder: **HEIMANN, Ulrich, Dr.**
**Schlagholz 28**
**D-4400 Münster (DE)**
Erfinder: **REITER, Udo, Dr.**
**Regerstrasse 22**
**D-4404 Telgte (DE)**
Erfinder: **SANTURE, David J., Dr.**
**43650 Nine Mile Road**
**Novi, MI 48375 (US)**
Erfinder: **BRÜCKEN, Thomas, Dr.**
**Grüner Weg 75**
**D-4400 Münster (DE)**
Erfinder: **JOUCK, Walter, Dr.**
**Brandhoveweg 134**
**D-4400 Münster (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

**Beschreibung**

Die Erfindung betrifft ein Verfahren zum Beschichten elektrisch leitfähiger Substrate, bei dem

(1) das elektrisch leitfähige Substrat in einen wäßrigen Elektrotauchlack getaucht wird

(2) das Substrat als Kathode geschaltet wird

(3) durch Gleichstrom ein Film auf dem Substrat abgeschieden wird

(4) das beschichtete Substrat aus dem Elektrotauchlack entfernt wird und

(5) der abgeschiedene Lackfilm eingebrannt wird.

Die Erfindung betrifft auch einen wäßrigen Lack, ein Epoxid-Aminaddukt und die Verwendung des Epoxid-Aminadduktes als Reibharz zur Herstellung von wäßrigen Pigmentpasten.

Das oben beschriebene kathodische Elektrotauchlackierverfahren ist bekannt (vgl. z. B. DE-OS-35 18 732, DE-OS-35 18 770, EP-A-4090, EP-A-12 463 und EP-A-262 069) und wird insbesondere zur Grundierung von Automobilkarosserien eingesetzt. Die dabei erhaltenen Lackschichten werden üblicherweise mit mindestens einer Füllerschicht und mindestens einer Decklackschicht überlackiert.

Die der vorliegenden Erfindung Zugrundeliegende Aufgabenstellung besteht in der Bereitstellung eines neuen kathodischen Elektrotauchlackierverfahrens. Die der Erfindung zugrundeliegenden Aufgabenstellung besteht insbesondere in der Bereitstellung neuer wäßriger Lacke für das oben beschriebene Elektrotauchlackierverfahren.

Diese Aufgabe wird überraschenderweise durch ein kathodisches Elektrotauchlackierverfahren gelöst, das dadurch gekennzeichnet ist, daß der wäßrige Elektrotauchlack unter Verwendung einer Pigmentpaste hergestellt wird, die als Reibharz ein Zumindest teilweise protoniertes EpoxidAminaddukt enthält, das erhältlich ist, indem

(A) ein Glycidylether eines Polyphenols, der im statistischen Mittel mindestens eine Epoxidgruppe im Molekül enthält, oder ein Gemisch aus solchen Glycidylethern

(B) ein Polyglycidylether eines Polyols, der im statistischen Mittel mehr als 1,0 Epoxidgruppen im Molekül enthält, oder ein Gemisch aus solchen Polyglycidylethern und

(C) eine Verbindung, die eine primäre Aminogruppe im Molekül enthält oder ein Gemisch aus solchen Verbindungen

zu einem Epoxid-Aminaddukt umgesetzt werden, das zumindest teilweise protoniert wird, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0.3 bis 0,7 Mol der Komponente (C) eingesetzt werden.

Die nach dem erfindungsgemäßen Verfahren hergestellten Lackschichten zeichnen sich insbesondere dadurch aus, daß sie überraschenderweise ein hohes Maß an Steinschlagfestigkeit (sowohl als einschichtige Lackierung als auch im mehrschichtigen Lackaufbau), ein hohes Maß an Flexibilität und guten Korrosionsschutz zeigen. Die erfindungsgemäß eingesetzten Elektrotauchlacke zeichnen sich durch hohe Spannungsfestigkeit, guten Umgriff und niedrige Gehalte an organischen Lösemitteln aus. Insbesondere die hohe Steinschlagfestigkeit der erhaltenen Lackierungen ist im Hinblick auf die Tatsache, daß eine hohe Flexibilität der Elektrotauchlackschicht noch keine Gewähr für eine hohe Steinschlagfestigkeit - insbesondere bei mehrschichtigen Lackierungen - darstellt, nicht vorhersehbar gewesen. In der EP-A-253404 werden Elektrotauchlacke beschrieben, die ein kationisches Umsetzungsprodukt aus einem Diglycidylether eines Diphenols, einem Diglycidylether eines Polyols, einem Diphenol und einer nucleophilen Verbindung enthalten. Zwischen der chemischen Struktur der in der EP-A-253404 beschriebenen Umsetzungsprodukte und der chemischen Struktur der erfindungsgemäßen Reibharze bestehen große Unterschiede.

Die erfindungsgemäß eingesetzten Elektrotauchlacke enthalten mindestens ein kathodisch abscheidbares Kunstharz, ggf. mindestens ein Vernetzungsmittel und Pigmente sowie ggf. Füllstoffe und sonstige allgemein gut bekannte Zusätze, wie Entschäumungsmittel, Verlaufshilfsmittel usw.

Die Pigmente und Füllstoffe werden in Form von Pigmentpasten in die Elektrotauchlacke eingearbeitet. Die Pigmentpasten werden - wie dem Fachmann bekannt - durch Vermahlen der Pigmente in Gegenwart eines geeigneten Reibharzes hergestellt.

Es ist nun erfindungswesentlich, daß die Elektrotauchlacke unter Verwendung einer Pigmentpaste hergestellt werden, die als Reibharz ein zumindest teilweise protoniertes EpoxidAminaddukt enthält, das erhältlich ist, indem

(A) ein Glycidylether eines Polyphenols, der im statistischen Mittel mindestens eine Epoxidgruppe im Molekül enthält, oder ein Gemisch aus solchen Glycidylethern

(B) ein Polyglycidylether eines Polyols, der im statistischen Mittel mehr als 1,0 Epoxidgruppen im Molekül enthält, oder ein Gemisch aus solchen Polyglycidylethern und

(C) eine Verbindung, die eine primäre Aminogruppe im Molekül enthält, oder ein Gemisch aus solchen Verbindungen

zu einem Epoxid-Aminaddukt umgesetzt werden, das zumindest teilweise protoniert wird, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0.3 bis 0,7 Mol der Komponente (C) eingesetzt werden.

Die erfindungsgemäß eingesetzten Reibharze werden hergestellt, indem die Komponenten (A), (B), und (C) zu einem Epoxid-Aminaddukt umgesetzt werden, das zumindest teilweise protoniert wird, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0.3 bis 0,7 Mol der Komponente (C) eingesetzt werden.

Das aus (A), (B) und (C) erhaltene Epoxid Aminaddukt sollte vorzugsweise epoxidgruppenfrei sein. Für den Fall, daß es noch Epoxidgruppen enthält ist es zweckmäßig, die verbliebenen Epoxidgruppen mit Verbindungen wie z. B. Monophenolen und Aminen, insbesondere sekundären Aminen umzusetzen (Beispiele für Verbindungen, die zur Umsetzung mit noch verbliebenen Epoxidgruppen geeignet sind, sind in der EP-A-253404 auf der Seite 8 von Zeile 28 bis Zeile 37 und Seite 9 Zeile 16 bis Seite 10 Zeile 15 aufgezählt). Bevorzugte Reibharze werden erhalten, wenn die Komponenten (A) und (B) in einem Äquivalentverhältnis von 1,0:1,0 bis 1,0:2,0 eingesetzt werden und wenn die Komponente (C) in einer solchen Menge eingesetzt wird, daß auf ein Äquivalent Epoxidgruppen aus (A) und (B) 0,4 bis 0,6 Mol der Komponente (C) kommen. Das zahlenmittlere Molekulargewicht der erfindungsgemäßen Reibharze sollte zwischen 1000 und 100000, vorzugsweise zwischen 3000 und 15000 liegen. Die Komponente (C) kann nacheinander mit (A) und (B) oder - was bevorzugt ist - mit einem Gemisch aus (A) und (B) umgesetzt werden. Die Umsetzung der Komponenten (A), (B) und (C) kann schon bei Raumtemperatur ablaufen. Zur Erreichung wirtschaftlicher Umsatzzeiten ist es zweckmäßig, die Reaktionstemperatur zu erhöhen, z. B. auf 60 bis 130 °C.

Die Umsetzung der Komponenten (A), (B) und (C) wird vorzugsweise in einem organischen Lösemittel wie z. B. Ethylenglycolmonobutylether oder Propylenglycolmonobutylether durchgeführt. Anschließend wird mit einer Säure, wie z. B. Essigsäure oder Milchsäure neutralisiert und in eine wäßrige Dispersion oder Lösung überführt. Die so erhaltene Dispersion bzw. Lösung kann dann nach allgemein gut bekannten Methoden zur Herstellung von wäßrigen Pigmentpasten eingesetzt werden. Es ist auch möglich, das aus (A), (B) und (C) erhaltene, in einem organischen Lösemittel gelöste Reaktionsprodukt mit Pigmenten und ggf. Füllstoffen zu vermischen und unter Zusatz von Säure und ggf. Wasser zu einer Pigmentpaste weiterzuverarbeiten.

Mit den erfindungsgemäßen Reibharzen können Pigmentpasten hergestellt werden, die sich durch eine ausgezeichnete Lagerstabilität auszeichnen.

Es können selbstverständlich auch Mischungen der erfindungsgemäßen Reibharze eingesetzt werden.

Die Pigmentpasten können im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Kalciumcarbonat, Aluminiumsilikat, Siliciumdioxid, Magnesiumcarbonat und Magnesiumsilikat können aber auch verwendet werden. Als farbige Pigmente können beispielsweise Cadmiumgelb, Cadmiumrot, Ruß, Phthalocyaninblau, Chromgelb, Toluidylrot und hydratisiertes Eisenoxid benutzt werden.

Die Pigmentpaste kann neben den Pigmenten auch noch Weichmacher, Füllstoffe, Netzmittel usw. enthalten.

Als Komponente (A) kann im Prinzip jeder Glycidylether eines Polyphenols, der im statistischen Mittel mindestens eine Epoxidgruppe im Molekül enthält, oder ein Gemisch aus solchen Glycidylethern eingesetzt werden. Als Komponente (A) können beispielsweise Glycidylether der auf Seite 4 der EP-A-253404 zu findenden allgemeinen Strukturformeln (I) und (II) eingesetzt werden. Als Komponente (A) werden vorzugsweise ggf. mit der Komponente (b) (vgl. unten) modifizierte Bisphenol-A-diglycidylether mit einem Epoxidäquivalentgewicht von 180 bis 3000, vorzugsweise 180 bis 1000 eingesetzt. Als Komponente (A) werden besonders bevorzugt Gemische von Glycidylethern eingesetzt, die erhältlich sind, indem in Gegenwart eines Katalysators, der die Reaktion zwischen phenolischen Hydroxylgruppen und Epoxidgruppen katalysiert, aus

(a) einem Diglycidylether eines Polyphenols, vorzugsweise einem Diglycidylether von Bisphenol-A mit einem zahlenmittleren Molekulargewicht von 260 bis 450, vorzugsweise von 370 bis 380 oder einem Gemisch aus solchen Diglycidylethern

(b) einem ggf. substituiertem Monophenol, vorzugsweise einem Alkylphenol mit 1 bis 18, vorzugsweise 4 bis 12 Kohlenstoffatomen im Alkylrest, oder eine Mischung aus solchen Monophenolen und

(c) einem Diphenol, vorzugsweise Bisphenol A und/oder einem Katalysator, der die Reaktion zwischen aliphatischen Hydroxylgruppen und Epoxidgruppen katalysiert

Glycidylether hergestellt werden, die ein zahlenmittleres Molekulargewicht von 980 bis 4000, vorzugsweise 980 bis 2000 aufweisen und die im statistischen Mittel pro Molekül 1,0 bis 3,0, vorzugsweise 1,2 bis 1,6 Epoxidgruppen und 0,25 bis 1,3, vorzugsweise 0,4 bis 0,9 von der Komponente (b) stammende Phenylethergruppen enthalten.

Die Herstellung der besonders bevorzugt eingesetzten (A) Komponente erfolgt vorzugsweise in organischen Lösemitteln wie z. B. Xylol, Ethylenglycolmonobutylether oder Propylenglycolmonobutylether. Die Reaktionstemperaturen liegen zweckmäßigerweise bei 100-180 °C. Katalysatoren, die die Reaktion zwischen phenolischen Hydroxylgruppen und Epoxidgruppen katalysieren, sind dem Fachmann bekannt. Als Beispiele werden genannt: Triphenylphoshin und die auf Seite 9 in den Zeilen 6 bis 9 der EP-A-253404 genannten Katalysatoren.

Die Komponente (c) soll dafür sorgen, daß aus der Komponente (a) höhermolekulare Glycidylether aufgebaut werden. Dieser Aufbau kann durch Kettenverlängerung mit einem Diphenol, vorzugsweise mit Bisphenol A erreicht werden. Der Aufbau kann aber auch durch Reaktion von in der Komponente (a) bzw. im Umsetzungsprodukt aus (a) und (b) enthaltenen aliphatischen Hydroxylgruppen mit Epoxidgruppen erfolgen. Um diese Reaktion gezielt zum Aufbau der gewünschten Glycidylether ausnutzen zu können, müssen Katalysatoren (z. B. tertiäre Amine) eingesetzt werden, die die Reaktion zwischen aliphatischen Hydroxylgruppen und Epoxidgruppen katalysieren. Durch den Einsatz von Diphenol und einem Katalysator gemäß (c) ist es möglich, beide Aufbaureaktionen - die Kettenverlängerung über das Diphenol und die Additionsreaktion zwischen aliphatischen Hydroxylgruppen und Epoxidgruppen - zu nutzen. Die Umsetzung mit der Komponente (b) soll die bevorzugten Glycidylether modifizieren und zur Bildung von aliphatischen Hydroxylgruppen führen, die benötigt werden, wenn Aufbaureaktionen über Additionsreaktionen von aliphatischen Hydroxylgruppen an Epoxidgruppen ablaufen sollen.

Durch die Angabe des zahlenmittleren Molekulargewichtes der herzustellenden besonders bevorzugten Komponente (A) und die Angaben über die in der Komponente (A) enthaltenen Epoxid- und von der Komponente (b) stammenden Phenylethergruppen ist es dem Fachmann problemlos möglich, die einzusetzenden Mengen an (a), (b) und (c) zu errechnen. Wenn über die Reaktion von aliphatischen Hydroxylgruppen und Epoxidgruppen ablaufende Aufbaureaktionen eingesetzt werden, muß die Aufbaureaktion nach Erreichen des vom Fachmann aus dem anzustrebenden zahlenmittleren Molekulargewicht und dem anzustrebenden Epoxidgruppengehalt errechenbaren Epoxidäquivalentgewichts abgebrochen werden. Dies geschieht zweckmäßigerweise durch Temperaturerniedrigung und Verdünnen der Reaktionsmischung.

Als Komponente (B) kann im Prinzip jeder Polyglycidylether eines Polyols, der im statistischen Mittel mehr als 1,0 Epoxidgruppen im Molekül enthält, oder ein Gemisch aus solchen Polyglycidylethern eingesetzt werden. Als Komponente (B) können beispielsweise die Polyglycidylether eingesetzt werden, die in der EP-A-253404 ab Zeile 42 der Seite 4 bis Zeile 13 der Seite 8 beschrieben sind.

Als Komponente (B) werden vorzugsweise Polyglycidylether von Polyetherpolyolen, besonders bevorzugt Diglycidylether von Polyetherdiolen mit zahlenmittleren Molekulargewichten von 300 bis 3000, vorzugsweise 400 bis 1200 eingesetzt. Als Beispiele für besonders bevorzugte Polyglycidylether werden Diglycidylether von Poly(ethylenglycol), Poly(propylenglycol), Poly(ethylenglycolpropylenglycol) und Poly(1,4 butandiol) genannt, wobei die zahlenmittleren Molekulargewichte der Diglycidylether zwischen 300 bis 3000, vorzugsweise zwischen 400 bis 1200 liegen.

Als Komponente (C) wird eine Verbindung eingesetzt, die eine primäre Aminogruppe im Molekül enthält oder ein Gemisch aus solchen Verbindungen. Die Komponente (C) darf nur eine primäre Aminogruppe im Molekül enthalten. Die Komponente (C) kann neben der primären Aminogruppe noch weitere funktionelle Gruppen wie z. B. tertiäre Aminogruppen und Hydroxylgruppen enthalten. Die Komponente (C) wird unter Bildung von tertiären Aminogruppen in die erfindungsgemäßen Epoxid-Aminaddukte eingebaut. Eine primäre Aminogruppe reagiert dabei mit zwei Epoxidgruppen und verknüpft somit kettenverlängernd zwei Moleküle der Komponenten (A) und/oder (B). Ein Teil der Komponente (C) kann auch mit endständigen Epoxidgruppen unter Bildung von sekundären Aminogruppen reagieren.

Als Komponente (C) kann im Prinzip jede Verbindung eingesetzt werden, die eine und nur eine primäre Aminogruppe im Molekül enthält. Als Beispiele werden Verbindungen der allgemeinen Formel $H_2N-CR_1R_2-R_3-0(CHR_4-CHR_5-0)_nR_6$ genannt. In dieser Formel stehen $R_1$ und $R_2$ für Wasserstoff, Alkyl- oder-CH-OH Gruppen, $R_3$ steht für einen linearen oder verzweigten Alkylenrest, insbesondere für einen Alkylenrest mit 1 bis 3 Kohlenstoffatomen, $R_4$ und $R_5$ stehen für Wasserstoff oder Alkylreste mit 1 bis 4 Kohlenstoffatomen, $R_6$ steht für Wasserstoff, einen Alkyl-, Cycloalkyl- oder Phenylrest, vorzugsweise für einen Alkylrest mit 1 bis 6 Kohlenstoffatomen und $n = 0-5$. Als Beispiele für einsetzbare Verbindungen diesen Typs werden genannt: Ethanolamin, Propanolamin, Butanolamin, 2-Amino-2-methylpropanol-1 ($H_2N-C(CH_3)_2-CH_2OH$), 2 Amino-2-ethylpropanol-1 und ethoxyliertes und/oder proporyliertes Ethanolamin oder Propanolamin, wie z. B. 2-2' Aminoethoxyethanol ($H_2N-CH_2-CH_2-O-CH_2-CH_2-OH$) und Diethylenglykolmono(3-aminoproyl)ether ($H_2N-(CH_2)_3-O-CH_2-CH_2-O-CH_2-CH_2-OH$).

Als Komponente (C) können auch Verbindungen eingesetzt werden, die eine primäre und eine tertiäre Aminogruppe im Molekül enthalten. Als Beispiele werden genannt: N,N Dimethylaminopropylamin, N,N Diethylaminoethylamin und dergleichen.

Als Komponente (C) können auch primäre Alkylamine wie z. B Hexylamin eingesetzt werden. Auch ggf. substituiertes Anilin kann als Komponente (C) eingesetzt werden. Als Komponente (C) werden vorzugsweise Hexylamin und N,N Dimethylaminopropylamin sowie 2-2' Aminoethoxyethanol eingesetzt.

Die erfindungsgemäß eingesetzten Elektrotauchlacke enthalten neben der mit dem erfindungsgemäßen Reibharz hergestellten Pigmentpaste noch mindestens ein kathodisch abscheidbares Kunstharz sowie ggf. mindestens ein Vernetzungsmittel.

Die erfindungsgemäß eingesetzten Elektrotauchlacke können prinzipiell alle für die Herstellung von Elektrotauchlacken geeigneten kathodisch abscheidbaren fremd- oder selbstvernetzenden Kunstharze enthalten. Die erfindungsgemäß eingesetzten Elektrotauchlacke können auch Mischungen unterschiedlicher kathodisch abscheidbarer Kunstharze enthalten.

Bevorzugt sind jedoch die Elektrotauchlacke, die kationische, aminmodifizierte Epoxidharze als kathodisch abscheidbare Kunstharze enthalten. Es sind sowohl selbst- als auch fremdvernetzende kationische aminmodifizierte Epoxidharze bekannt. Bevorzugt werden fremdvernetzende kationische, aminmodifizierte Epoxidharze eingesetzt. Die Herstellung kationischer aminmodifizierter Epoxidharze ist bekannt und wird beispielsweise in folgenden Patentdokumenten beschrieben: DE-OS-3518732, DE-OS-3518770, EP-A-4090 und EP-A-12463. Unter kationischen, aminmodifizierten Epoxidharzen werden kationische Reaktionsprodukte aus

(i) ggf. modifizierten Polyepoxiden und

(ii) Aminen

verstanden.

Unter Polyepoxiden werden Verbindungen verstanden, die zwei oder mehr Epoxidgruppen im Molekül enthalten.

Besonders bevorzugte (i)-Komponenten sind Verbindungen, die herstellbar sind durch Umsetzung von

(j) einer Diepoxidverbindung oder eines Gemisches von Diepoxidverbindungen mit einem Epoxidäquivalentgewicht unter 2000 mit

(jj) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,

wobei die Komponenten (j) und (jj) in einem Molverhältnis von 10:1 bis 1:1, bevorzugt 4:1 bis 1,5:1, eingesetzt werden und die Umsetzung in Anwesenheit eines Katalysators, der die Reaktion zwischen aliphatischen Hydroxylgruppen und Epoxidgruppen katalysiert bis zu einem Epoxidäquivalentgewicht von 600 bis 2000, vorzugsweise 800 bis 1400 durchgeführt wird (vgl. DE-OS-3518770).

Weitere besonders bevorzugte (i)-Komponenten sind Verbindungen, die herstellbar sind durch eine bei 100 bis 195 °C, ggf. in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, ggf. zusammen mit mindestens einer Monoepoxidverbindung, zu einem Epoxidharz, in dem Diepoxidverbindung und Starter in einem Molverhältnis von größer 2:1 bis 10:1 eingebaut sind (vgl. DE-OS-35 18 732).

Polyepoxide, die zur Herstellung der besonders bevorzugten (i)-Komponenten und auch selbst als (i)-Komponenten einsetzbar sind, sind aus Polyphenolen und Epihalohydrinen hergestellte Polyglycidylether von Polyphenolen. Als Polyphenole können z. B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiärbutylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z. B. Ethylenglykol, Diethylenglykol, Triethylenglykol, 1,2-Propylenglykol, 1-4-Propylenglykol, 1,5-Pentandiol, 1,2,6-Hexantriol, Glycerin und Bis-(4-hydroxycyclohexyl)2,2-propan.

Es können auch Polyglycidylester von Polycarbonsäuren, wie z. B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:

EP 0 505 445 B1

a) Carboxylgruppenhaltige Verbindungen, wie gesättigte oder ungesättigte Monocarbonsäuren (z. B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z. B. Milchsäure, Dimethylolpropionsäure) sowie carboxylgruppenhaltige Polyester oder

b) aminogruppenhaltige Verbindungen, wie Diethylamin oder Ethylhexylamin oder Diamine mit sekundären Aminogruppen, z. B. N,N'-Dialkylalkylendiamine, wie Dimethylethylendiamin, N,N'-Dialkyl-polyoxialkylenamine, wie N,N'-dimethylpolyoxipropylendiamin, cyanalkylierte Alkylendiame, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z. B. Hexamethylendiamin), Polycarbonsäuren, insbesondere Fettsäuren, oder das Umsetzungsprodukt von einem Mol Diaminohexan mit zwei Molen Monoglycidylether oder Monoglycidylester, speziell Glycidylester $\alpha$-verzweigter Fettsäuren, wie der Versaticsäure, oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N,N'-diethanol, Hexandiol-1,6, Hexandiol-2,5, 1,4-Bis-(hydroximethyl)cyclohexan, 1,1-Isopropylidenbis-(p-phenoxi)-2-propanol, Trimethylolpropan, Pentaerythrit oder Aminoalkohole, wie Triethanolamin, Methyldiethanolamin oder hydroxlgruppenhaltige Alkylketimine, wie Aminomethylpropandiol-1,3-methyl-isobutylketimin oder Tris-(hydroximethyl)-aminomethancyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Als Komponente (ii) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z. B. Methylethanolamin, Diethanolamin u. dgl. Ferner sind Dialkylaminoalkylamine, wie z. B. Dimethylaminoethylamin, Diethylaminopropylamin, Dimethylaminopropylamin u. dgl. geeignet. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (ii)-Komponenten eingesetzt.

Die für die Wasserverdünnbarkeit und elektrische Abscheidung erforderlichen Ladungen können durch Protonisierung mit wasserlöslichen Säuren (z. B. Borsäure, Ameisensäure, Milchsäure, bevorzugt Essigsäure) erzeugt werden.

Eine weitere Möglichkeit zur Einführung kationischer Gruppen in die Komponente (i) besteht in der Umsetzung von Epoxidgruppen der Komponente (i) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z. B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Bevorzugte Elektrotauchlacke werden erhalten, wenn als kathodisch abscheidbare Kunstharze fremdvernetzende kationische aminmodifizierte Epoxidharze in Kombination mit einem geeigneten Vernetzungsmittel eingesetzt werden.

Beispiele für geeignete Vernetzungsmittel sind Phenoplaste, polyfunktionelle Mannichbasen, Melaminharze, Benzoguanaminharze, blockierte Polyisocyanate und Verbindungen, die mindestens zwei Gruppierungen der allgemeinen Formel $R^1$-O-CO-enthalten.

Der Rest $R^1$ bedeutet:

$R^1 = R^2O\text{-}CO\text{-}CH_2\text{-}$, $R^3\text{-}CHOH\text{-}CH$, $R^4\text{-}CHOR^5\text{-}CHOH\text{-}CH_2\text{-}$

$R^2 = $ Alkyl

$R^3 = $ H, Alkyl, $R^6\text{-}O\text{-}CH_2$ oder $R^6\text{-}CO\text{-}O\text{-}CH_2\text{-}$

$R^4 = $ H oder Alkyl

$R^5 = $ H, Alkyl oder Aryl

$R^6 = $ Alkyl, Cycloalkyl oder Aryl

Bevorzugte Elektrotauchlacke werden erhalten, wenn als Vernetzungsmittel blockierte Polyisocyanate eingesetzt werden.

Als blockierte Polyisocyanate können beliebige Polyisocyanate benutzt werden, bei denen die Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa 90 °C bis etwa 300 °C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Die Pigmentpaste wird in einer solchen Menge zur wäßrigen Dispersion des kathodisch abscheidbaren Kunstharzes gegeben, daß der fertige Elektrotauchlack die für die Abscheidung erforderlichen Eigenschaften aufweist. Das Gewichtsverhältnis zwischen Reibharz und kathodisch abscheidbarem Kunstharz liegt zwischen 0,05 und 0,5, vorzugsweise zwischen 0,1 und 0,2.

Die erfindungsgemäß eingesetzten Elektrotauchlacke können neben dem kathodisch abscheidbaren Kunstharz, dem Reibharz und den Pigmenten noch weitere übliche Zusatzstoffe enthalten, wie z. B. Zusatzlösemittel, Antioxidantien, oberflächenaktive Mittel usw.

Der Festkörper der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 4 und 8, vorzugsweise zwischen 5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z. B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m$^2$. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200 °C über eine Zeitdauer von 10 bis 60 Minuten, vorzugsweise bei 150 bis 180 °C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die erfindungsgemäßen wäßrigen Lacke können auch durch Spritzen, Streichen, Rakeln usw. sowohl auf elektrisch leitende als auch auf elektrisch nichtleitende Substrate aufgebracht werden.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Reibharze

1.1 Reibharz A1:

In einem mit Rührwerk, Innenthermometer, Stickstoffeinlaß und Wasserabscheider mit Rückflußkühler ausgestatteten Reaktor werden 752 g eines Epoxidharzes[1]) auf Basis Bisphenol A mit einem Epoxidäquivalentgewicht (EEW) von 188 (4 Äquivalente), 228 g Bisphenol A (1 mol), 262 g Dodecylphenol (1 mol) und 64 g Butylglykol vorgelegt. Man heizt auf 110 °C auf, fügt 50 g Xylol zu und destilliert dieses unter schwachem Vakuum zusammen mit möglichen Wasserspuren wieder ab. Sodann gibt man 1,6 g Triphenylphoshin zu und heizt auf 130 °C auf. Nach exothermer Wärmetönung auf 150 °C läßt man bei 130 °C noch 1 h nachreagieren.

[1])im folgenden als Epoxidharz (EEW 188) bezeichnet

Das EEW der Reaktionsmischung liegt dann bei 1240. Man kühlt und gibt währenddessen 300 g Butylglykol und 666 g eines Polypropylenglykoldiglycidylethers mit EEW 333 (DER 732, Dow Chemical) zu. Bei 90 °C werden 105 g 2-2'-Aminoethoxyethanol ($H_2N-CH_2-CH_2-O-CH_2-CH_2-OH$) und 10 min. später 51 g N,N-Dimethylaminopropylamin (0,5 mol) zugefügt. Die Reaktionsmischung wird nach kurzzeitiger Exothermie noch für 2 h bei 90 °C gehalten, bis die Viskosität konstant bleibt, und anschließend wird mit 520 g Butylglykol verdünnt. Das Harz hat einen Festkörper von 69,7 % (gemessen 1 h bei 130 °C) und eine Viskosität von 2,2 d Pas (gemessen an einer 40 %-igen mit Propylenglykolmonomethylether [1]) verdünnten Harzlösung am Platte-Kegel-Viskosimeter bei 23 °C).

1.2 Reibharz A2

In einem vorstehend beschriebenen Reaktor werden 915,1 g Epoxidharz auf Basis Bisphenol A (EEW 188), 277,5 g Bispheonol A und 212,5 g Dodecylphenol zusammen mit 73,9 g Xylol auf 130 °C erwärmt. Man gibt nun 2,8 g N,N-Dimethylbenzylamin zu und hält nach kurzzeitiger Exothermie bei 130 °C, bis das EEW auf 1150 gestiegen ist. Dann verdünnt man unter Kühlung mit 395,5 g Butylglykol und fügt, sobald die Temperatur 100 °C unterschritten hat, 213,2 g 2-2'-Aminoethoxyethanol in einer Portion zu. Es tritt eine exotherme Reaktion ein, und die Temperatur sinkt nach ca. 20 min. wieder auf 100 °C ab. Dann läßt man innerhalb von 20 min. 1041,7 g Grilonit F 713 (Polytetrahydrofurandiglycidylether mit EEW 428, Ems-Chemie) zulaufen und läßt bei 100 °C so lange nachreagieren, bis die Viskosität konstant bleibt und kein Epoxid mehr nachweisbar ist (ca. 2 h). Anschließend wird mit 670,6 g Butylglykol verdünnt.

Die klare, farblose Harzlösung hat einen Festgehalt von 70,0 % (1 h bei 130 °C) und eine Viskosität von 3,35 d Pas (40 %-ig in Solvenon PM; Platte-Kegel-Viskosimeter bei 23 °C). Der Basengehalt liegt bei 0,74 meq/g Festharz.

1.3 Reibharz A 3

Man verfährt analog zu dem unter 1.1 beschriebenen Reibharz A1, das EEW der ersten Reaktionsstufe liegt hier jedoch bei 860:

30,29 Teile Epoxidharz (EEW 188)
9,18 Teile Bisphenol A
7,04 Teile Dodecylphenol
2,37 Teile Butylglykol
0,07 Teile Triphenylphosphin
9,91 Teile Butylglykol
17,88 Teile DER 732
(Polypropylenglykoldiglycidylether, Dow Chemicals)
4,23 Teile 2-2'-Aminoethoxyethanol
1,37 Teile N,N-Dimethylaminopropylamin
17,66 Teile Butylglykol

| Harzkennzahlen: | |
| --- | --- |
| Festkörper: | 69.8 % (1 h 130 °C) |
| Viskosität: | 5.5 d Pas (40 %ig in Solvenon PM) |
| MEQ-Base: | 0,88 meq/g Festharz |

1.4 Reibharz A 4

Analog 1.1 werden 627,5 g Epoxidharz (EEW 188) und 190,2 g Bisphenol A in Gegenwart von 43,1 g Butylglykol und 1,2 g Triphenylphosphin bei 130 °C zu einem Vorprodukt mit EEW 490 umgesetzt. Sodann gibt man unter Kühlung 401,7 g Butylglykol und 1428,5 g Grilonit F713 zu. Bei 60 °C werden 62,7 g N-Methylethanolamin zugegeben, worauf die Temperatur auf 64 °C steigt. 10 min. später werden unter weiterer Kühlung 168,5 g n-Hexylamin und nach weiteren 10 min. 42,5 g N,N-

[1]) im folgenden als Solvenon PM bezeichnet (Hersteller BASF)

Dimethylaminopropylamin zugegeben. Man läßt die Mischung exotherm reagieren und hebt die Temperatur durch schwaches Heizen auf 110 °C an.

Man hält noch 2 Stunden bei dieser Temperatur bis die Viskosität konstant bleibt. Sodann kühlt man und verdünnt mit 635,3 g Butylglykol.

| | |
|---|---|
| Festkörper: | 70,3 % (1 h 130 °C) |
| Viskosität: | 2,6 d Pas (40 %ig in Solvenon PM, Platte-Kegel-Gerät bei 23 °C). |
| MEQ-Base: | 1,24 meq/g Festharz |

1.5 Reibharz A5

Das Beispiel beschreibt die Herstellung einer lösemittelarmen, wässrigen Reibharzlösung. Der Gehalt an organischem Lösemittel (Butylglykol) liegt hier bei 5,7 %, bzw. 17,6 % auf Festharz. Man reagiert zunächst analog 1.1 564 g Epoxidharz (EEW 188), 171 g Bisphenol A und 196 g Dodecylphenol in Gegenwart von 88 g Butylglykol und 3,4 g Triphenylphosphin bei 130 °C bis zu einem EEW von 1210. Sodann kühlt man auf 90 °C und gibt währenddessen 749 g DER 732 (EEW 333, Dow Chemicals) zu. Unter weiterem Kühlen werden nun 105 g 2-2'-Aminoethoxyethanol zugesetzt, wodurch die Temperatur kurzzeitig auf 98 °C steigt. 20 min. später, wenn die Temperatur wieder auf 90 °C gesunken ist, gibt man 51 g N,N-Dimethylaminopropylamin zu und läßt bei dieser Temperatur weiterreagieren, bis kein Viskositätsanstieg mehr erkennbar ist (ca. 2 h; Viskosität 2,6 d Pas, 40 %ig in Solvenon PM). Dann wird mit einer Mischung aus 24 g Eisessig und 3550 g entionisiertem Wasser verdünnt und ausgetragen. Die wässrige Lösung des kationisierten Harzes hat einen Festgehalt von 32,2 % (1 h, 130 °C).

1.6 Reibharz A6 (Vergleichsbeispiel)

27,81 Teile Bisphenol A-diglycidylether mit einem EEW von 188, 1,44 Teile Xylol und 5,81 Teile Bisphenol A werden in Gegenwart von 0.002 Teilen Triphenylphosphin bei 150-160 °C bis zu einem EEW von 345 umgesetzt. Der Ansatz wird dann mit 21,61 Teilen Butylglykol verdünnt und auf 49 °C gekühlt. Dann wird eine Mischung aus 7,77 Teilen 9-Amino-3.6-dioxanonan-1-01[1] und 4,07 Teilen N,N-Dimethylaminopropylamin innerhalb 6 min. zugegeben, worauf die Temperatur auf 110 °C steigt. Man hält die Mischung 1 h lang zwischen 110 und 115 °C bevor 6,45 Teile Butylglykol zugegeben werden und der Ansatz auf 77 °C gekühlt wird. Anschließend werden 14,9 Teile Nonylphenolglycidylether zugegeben. Die Temperatur steigt daraufhin auf 90 °C an und wird dort 1 Std. gehalten, bevor mit 10,03 Teilen Butylglykol verdünnt und gekühlt wird. Der Feststoffgehalt der dünnflüssigen Harzlösung liegt bei 60 %.

2. Herstellung der Pigmentpasten:

Zur Herstellung der Pigmentpasten werden gemäß nachfolgender Mengentabelle zunächst entionisiertes Wasser, Essigsäure (90 %ig), ggf. Entschäumer und das Reibharz vorgemischt. Dann fügt man Ruß, basisches Bleisilikat, Extender, Titandioxid (Typ R900) und den Vernetzungskatalysator zu und mischt 30 min. lang unter einem schnellaufenden Dissolverrührwerk. Anschließend wird die Mischung in einer Laborkleinmühle wäh rend 1 bis 1,5 h bis zu einer Hegmann-Feinheit von kleiner 12 dispergiert und mit weiterem Wasser ggf. auf die gewünschte Verarbeitungs-viskosität eingestellt. Die Mengenangaben verstehen sich als Gewichtsanteile. Man erhält in den beschriebenen Fällen entmischungsstabile wässrige Pigmentpasten, wobei die Beispiele B1-B5 graue Pasten, B6 eine Vergleichspaste und B7 eine Schwarzpaste beschreiben. B5 beschreibt darüberhinaus eine Paste mit sehr niedrigem Gehalt an organischem Lösemittel (ca. 5 %, auf Pastenfestkörper bezogen).

[1] Hersteller Union Carbide

Tabelle 1:

Pigmentpasten B1 bis B7

| | B 1 | B 2 | B 3 | B 4 | B 5 | B 6 | B 7 |
|---|---|---|---|---|---|---|---|
| Reibharz | | | | | | | |
| - Typ | A 1 | A 2 | A 3 | A 4 | A 5 | A 6 | A 3 |
| - Menge | 18,50 | 18,50 | 18,50 | 18,50 | 40,12 | 21,60 | 17,0 |
| Entionisiertes Wasser | 34,27 | 34,27 | 34,27 | 34,27 | 12,62 | 29,33 | 40,7 |
| Essigsäure (90 %ig) | 0,45 | 0,45 | 0,45 | 0,45 | 0,48 | 1,59 | 0,4 |
| Entschäumer[1] | – | – | – | – | – | 0,70 | – |
| Ruß | 0,50 | 0,50 | 0,50 | 0,50 | 0,50 | 0,50 | 2,1 |
| Bleipigment | 4,80 | 4,80 | 4,80 | 4,80 | 4,80 | 4,80 | 4,2 |
| Extender[2] | 6,75 | 6,75 | 6,75 | 6,75 | 6,75 | 6,75 | 34,1 |
| Titandioxid | 32,48 | 32,48 | 32,48 | 32,48 | 32,48 | 32,48 | – |
| Dibutylzinnoxid | 2,25 | 2,25 | 2,25 | 2,25 | 2,25 | 2,25 | 1,5 |
| | 100 | 100 | 100 | 100 | 100 | 100 | 100 |

1) "Tristas Antifoam", Tristas Chemical Co., Dallas (USA)

2) Für B1-B6: HEWP, English China Clay International; Für B7: Blanc-fixe

3. Kathodisch abscheidbare Kunstharze

3.1 Harz 1

Entsprechend dem in der deutschen Patentanmeldung DE-P 3918 511.7 beschriebenen Beispiel II.2 werden 1.351 g Epoxidharz auf Basis Bisphenol A (EEW 490; Fa. Shell) und 81 g Xylol unter Stickstoff bei 110 °C unter Rühren aufgeschmolzen. Nach Zugabe von 181 g Dodecylphenol werden unter Vakuum bei 111 °C Restwasserspuren azeotrop ausgekreist. Dann heizt man auf 130 °C auf und gibt währenddessen 2.4 g N,N-Dimethylbenzylamin zu. Man hält die Mischung ca. 4 h auf dieser Temperatur, bis das EEW auf 1.109 gestiegen ist. Dann gibt man 190 g Xylol und 101 g Diethanolamin zu und kühlt gleichzeitig die leicht exotherm reagierende Mischung auf 90 °C ab. Nachdem das Diethanolamin 1 Std. reagiert hat, werden 1.085 g des nachfolgend beschriebenen urethanhaltigen Ketiminaddukts und 12 g entionisiertes Wasser zugegeben. Anschließend läßt man die Mischung 2 Std. bei 90 °C reagieren, kühlt auf 70 °C ab und trägt ohne weitere Verdünnung aus.

Das Harz hat einen Festgehalt von 83,1 % (1 Std. bei 130 °C gemessen) und einen Basengehalt von 0,67 meq/g Festharz.

Urethanhaltiges Ketiminaddukt:

1.403 g Polyetherdiol Pluriol PE 3100[1] werden in 230 g Methylisobutylketon gelöst, durch Azeotropdestillation entwässert und mit 668 g Desmodur W[2] (Isocyanatäquivalentgewicht 131, Fa. Bayer) bis zu einem Isocyanatäquivalentgewicht von 852 (bezogen auf Festanteile) umgesetzt. Anschließend wird mit 633 g einer Ketiminlösung, die durch Umsetzung von 1100 g 2-2'Aminoethoxyethanol und 1886 g Methylisobutylketon unter Wasserabspaltung zugänglich ist (Aminäquivalentgewicht 265), reagiert, bis keine Isocyanatgruppen mehr nachweisbar sind (IR-Spektrum). Dann wird mit 128 g Butylglykol und 104 g Methylisobutylketon verdünnt. Die Lösung hat einen theoretischen Festgehalt von 80 %, der Basengehalt liegt bei 0,82 meq/g Festharz. Die Viskosität (60 %-ige Verdünnung mit Solvenon PM, Platte Kegel-Viskosimeter) liegt bei 7,2 d Pas.

3.2 Harz 2

In einem Reaktionsgefäß werden 1818 g Epikote 1001 (EEW 490, Fa. Shell), 243 g Dodecylphenol und 108 g Xylol vorgelegt und unter Inertgasatmosphäre bei 110 °C geschmolzen. Anschliessend werden unter leichtem Vakuum Wasserspuren durch Auskreisen entfernt. Dann gibt man 3,3 g N,N-Dimethylbenzylamin zu, erwärmt die Reak tionsmischung auf 130 °C, und hält diese Temperatur für ca. 3 Std., bis das EEW auf 1110 angestiegen ist. Sodann kühlt man und gibt in rascher Abfolge 135 g Butylglykol, 136 g Diethanolamin und 239 g Xylol zu. Dabei steigt die Temperatur kurzzeitig an. Danach läßt man das Reaktionsgemisch auf 90 °C abkühlen und hält noch 30 min. bei dieser Temperatur. Danach gibt man zur weiteren Verdünnung 135 g Propylenglykolmonophenylether und 340 g Isobutanol zu und kühlt auf 65 °C. Die Mischung wird nun mit 43 g N,N-Dimethylaminopropylamin versetzt und bei 80 °C 3 h lang ausreagiert.

Die Harzlösung hat einen Festkörper von 70 %, einen Basengehalt von 0,96 meq/g und eine Viskosität von 4,2 d Pas (40 %-ig in Solvenon PM, Platte-Kegel-Viskosimeter bei 23 °C).

4. Vernetzungsmittel

4.1 Vernetzer 1

In einem Reaktor, der mit einem Rührer, Rückflußkühler, Innenthermometer und Inertgaseinleitung ausgestattet ist, werden 1.133 g Toluylendiisocyanat (Mischung aus etwa 80 % 2,4- und 20 % 2,6-Isomeren) und 356 g Methylisobutylketon unter Stickstoffatmosphäre vorgelegt. Man gibt 0,7 g Dibutylzinndilaurat zu und trägt innerhalb von 4 Stunden 290 g Trimethylolpropan in Form kleiner Portionen in gleichen Zeitabständen ein. Die Kühlung wird so einreguliert, daß die Temperatur der Reaktionsmischung nicht über 45 °C steigt. 30 min. nach Zugabe der letzten Portion Trimethylolpropan wird ein NCO-Äquivalentgewicht von 217 gemessen (bezogen auf Festanteile). Unter weiterer Kühlung läßt man nun innerhalb 1 Std. 722 g n-Propylglykol zutropfen. Am Ende der Zugabe ist die Temperatur auf 86 °C angestiegen. Man erwärmt nun auf 100 °C und läßt eine weitere Stunde nachreagieren. Bei der anschließenden Kontrolle sind keine NCO-Gruppen mehr nachweisbar. Man kühlt nun ab und verdünnt mit 500 g Methylisobutylketon. Die Lösung dieses Polyurethanvernetzers hat einen Feststoffgehalt von 69,8 % (1 Std. bei 130 °C gemessen).

4.2 Vernetzer 2

In einem Reaktor, wie er im vorstehenden Beispiel beschrieben ist, werden unter Stickstoffatmosphäre 1.146 g trimerisiertes Hexamethylendiisocyanat mit einem NCO-Äquivalentgewicht von 191 ("Basonat PLR 8638", Fa. BASF) und 339 g Methylisobutylketon unter Rühren auf 50 °C erwärmt. Während 4 Std. werden nun 774 g Di-n-butylamin zugetropft. Die Temperatur wird dabei durch Kühlung unter 55 °C gehalten. Die Vernetzerlösung wird anschließend gekühlt und mit weiteren 141 g Methylisobutylketon verdünnt. Der Festgehalt liegt bei 80,2 % (1 h bei 130 °C gemessen).

(1) Fa. BASF; Polyetherdiol auf Basis von Ethylenoxid und Propylenoxid mit mittlerem Molekulargewicht von ca. 1.100

(2) Desmodur W = Dicyclohexylmethandiisocyanat

5. Kathodisch abscheidbare wässrige Bindemitteldispersionen.

Die Herstellung der wässrigen Bindemitteldispersionen erfolgt aus den in der nachfolgenden Tabelle (Tab. 2) aufgeführten Komponenten in den dort aufgeführten Gewichtsanteilen. Es wird folgendermaßen verfahren:

Harz, Vernetzer und Zusatzstoffe werden bei Raumtemperatur gemischt und mit der vorgesehenen Menge Eisessig versetzt. Anschließend wird die erste Wassermenge ($H_2O$ I) portionsweise eingerührt. Man gibt sodann ggf. Lösemittel und weitere Lackhilfsmittel zu, homogenisiert kurze Zeit und verdünnt mit der zweiten Wassermenge ($H_2O$ II) in kleinen Portionen auf den Endfeststoffgehalt.

Die Dispersionen werden in einer anschließenden Vakuumdestillation von flüchtigen Lösemitteln befreit, wodurch die Dispersion auf einen theoretischen Festkörper von 35 % aufkonzentriert wird (Dispersion 1), oder wobei das destillativ entfernte Lösemittel mengenmäßig durch Wasser ersetzt wird (Dispersion 2). Danach wird die Dispersion filtriert.

Tab. 2

| Wässrige Bindemitteldispersionen (Gewichtsanteile in g) | | |
|---|---|---|
| Dispersion | 1 | 2 |
| Harz 1 | 878,8 | - |
| Harz 2 | - | 956,8 |
| Vernetzer 1 | 220,9 | 257,6 |
| Vernetzer 2 | 193,2 | 225,4 |
| Plastilit 3060[1] | 89,6 | 89,6 |
| Entschäumer[2] | 2,2 | 2,2 |
| Isobutanol | 150,0 | - |
| Eisessig | 17,8 | 16,3 |
| $H_2O$ I   839,7 | 694,3 | |
| $H_2O$ II | 1.760,0 | 960,0 |

[1] Polypropylenglykolverbindung, Fa. BASF
[2] 50 %-ige Lösung von Surfynol (Fa. Air Products) in Butylglykol

Die Dispersionen haben einen Festgehalt von 34,9 % (Dispersion 1) und von 35,2 % (Dispersion 2, jeweils 1 h bei 130 °C bestimmt).

6. Zubereitung der Elektrotauchbäder und Abscheidung von Lackfilmen

Zur Prüfung als kathodisch abscheidbare Elektrotauchlacke werden die wässrigen Bindemitteldispersionen aus Tab. 2 in den unten jeweils angegebenen Gewichtsteilen mit entionisiertem Wasser und 10 %iger Essigsäure verdünnt.

In die so verdünnte Bindemitteldispersion wird dann unter Rühren die jeweilige Pigmentpaste aus Tab. 1 eingetragen.

Man läßt die Elektrotauchbäder 5 Tage bei Raumtemperatur unter Rühren altern. Die Abscheidung der Lackfilme erfolgt während 2 min. bei der angegebenen Spannung auf kathodisch geschalteten zinkphosphatierten Stahlprüftafeln sowie auf kathodisch geschalteten nicht vorbehandelten Stahltafeln. Die Badtemperatur wird hierbei auf 27 °C gehalten. Die abgeschiedenen Naßfilme werden mit entionisiertem Wasser nachgespült und während 20 min. bei 165 °C eingebrannt.

6.1 Elektrotauchbad 1

459 Teile entionisisertes Wasser
1 Teil Essigsäure (10 %-ig)
430 Teile Dispersion 1 und
110 Teile Pigmentpaste B1

werden, wie oben beschrieben, in einen Elektrotauchlack überführt. Der Feststoffgehalt des Bades liegt bei 20 %.

Nach Abscheidung bei 300 Volt und Einbrennen erhält man einen glatten, glänzenden Film, mit sehr guter Beständigkeit gegenüber Lösemitteln und einer Schichtdicke von 28 $\mu$m.

EP 0 505 445 B1

| Verlauf* | 2 |
|---|---|
| Erichsen-Tiefung | 7 |
| Gitterschnitt* | 0 |

*Benotung: 0 bester Wert, 5 schlechtester Wert

## 6.2 Elektrotauchbad 2

Analog zum Elektrotauchbad 1 wird in der bereits beschriebenen Weise ein Elektrotauchlackbad hergestellt. Die Mengen der Komponenten sind identisch, jedoch wird nun die Dispersion 2 und als Pigmentpaste B 4 eingesetzt. Der Feststoffgehalt liegt bei 20 %.

Nach Abscheidung bei 260 Volt und Einbrennen erhält man einen glatten Film mit sehr guter Lösemittelbeständigkeit und einer Schichtdicke von 25 $\mu$m.

| Verlauf | 1-2 |
|---|---|
| Erichsen-Tiefung | 7 |
| Gitterschnitt | 0 |

## 6.3 Elektrotauchbäder 3, 4 und 5

In vorstehend beschriebener Weise werden aus Dispersion 2- und den Pigmentpasten B2, B3 und der Vergleichspaste B6 3 Elektrotauchlackbäder zubereitet. Die Mengenangaben sind für alle 3 Bäder identisch:

2295 Teile enitionisiertes Wasser

5 Teile Essigsäure (10 %-ig)

2150 Teile Dispersion 2

550 Teile Pigmentpaste

Der Festgehalt der Bäder liegt bei 20 %. Die Abscheidung und Prüfung der Bäder erfolgt auf zinkphosphatierten Stahltafeln. Zur Salzsprühnebelbelastungsprüfung nach ASTM über 360 h wurden nicht vorbehandelte Stahlbleche verwendet. Die Spannungen wurden so gewählt, daß in allen Fällen annähernd gleiche Schichtdicken zu erzielen sind. Die Prüfergebnisse sind in Tab. 3 aufgelistet.

Tab. 3

| Elektrotauchlackbäder 3-5, Abscheidung und Prüfung | | | |
|---|---|---|---|
| Bad | 3 | 4 | 5 (Vergleich) |
| Paste | B2 | B3 | B6 |
| Schichtdicke ($\mu$um) | 25 | 24 | 24 |
| Spannung (Volt) | 300 | 320 | 280 |
| Verlauf | 1-2 | 1 | 1-2 |
| Erichsen-Tiefung | 7 | 7 | 7 |
| Reverse Impact[1] (inch pound) | >80 | >80 | 40 |
| Biegung [2] (cm) | 0 | 0 | 1 |
| Gitterschnitt | 0 | 0 | 0 |
| Salzsprühnebeltest (Unterwanderung vom Schnitt in mm) | <1 | <1 | <1 |

[1] Nach Methode D 2794 ASTM

[2] Biegung am konischen Dorn nach Iso Norm 6860 in cm.

(0 = bester Wert)

## 6.4 Elektrotauchbad 6 (Vergleich)

Es wird ein weiteres Elektrotauchlackbad (Bad 6) als Vergleich zubereitet.

Das Bad enthält eine kathodisch abscheidbare wässrige Bindemitteldispersion, Dispersion 3, der gemäß der Deutschen Patentanmeldung DE 3801786 ein Polyoxypropylendiamin zugemischt worden ist. Die Herstellung erfolgt nach der unter Punkt 5 beschriebenen Methode aus den Komponenten:

| | |
|---|---|
| 915 Teile | Harz 2 |
| 246 Teile | Vernetzer 1 |
| 215 Teile | Vernetzer 2 |
| 134 Teile | Jeffamin D 2000[R1)] |
| 2 Teile | Entschäumer 2) |
| 22 Teile | Eisessig |
| 706 Teile | H2O I |
| 960 Teile | H2O II |

1) Handelsprodukt der Firma Texaco Chemical Company.

Polyoxypropylendiamin mit der Formel

$$H_2N-CH(CH_3)-CH_2-(-OCH_2-CH(CH_3))x-NH_2$$

x = 33,1

2) vgl. Tab. 2

Die resultierende wässrige Dispersion wird in einer Vakuumdestillation von niedrigsiedenden Lösemitteln befreit und anschließend mit entionisiertem Wasser auf einen Festkörper von 35 % verdünnt.

Aus 2295 Teilen entionisisiertem Wasser, 5 Teilen Essigsäure (10 %-ig), 2150 Teilen Dispersion 3 und 550 Teilen Pigmentpaste B6 wird in der vorstehend beschriebenen Weise ein Elektrotauchlackbad (Bad 6) zubereitet.

Abscheidung und Prüfung:

| | |
|---|---|
| Schichtdicke: | 25 $\mu$m |
| Spannung: | 260 V |
| Verlauf: | 1-2 |
| Erichsen-Tiefung: | 7 |
| Reverse-Impact (inch pound) | 80 |

6.5 Steinschlagprüfung der Elektrotauchlackbäder 3-6

Zur Steinschlagprüfung werden die elektrotauchlackierten, zinkphosphatierten Stahltafeln mit einem typischen Automobillacksystem überlackiert, wobei jede aufgetragene Lackschicht separat eingebrannt wird.

Zusammensetzung des Mehrschichtlackaufbaus:

25 $\mu$m Elektrotauchlack

35 $\mu$m Füller (Polyesterbasis, FC80-0100 BASF L + F)

35 $\mu$m Decklack (2K-High Solids-Lack, FD73-0782 BASF L + F)

Die angegebenen Schichtdicken verstehen sich als Trockenfilmschichtdicken.

Die so überlackierten Stahltafeln werden einem Einzelsteinschlagtest mit einem "Hahnpick"-Testgerät nach Prüfmethode DIN 55995 (Mercedes Benz DBL 7292) unterzogen. Die Ergebnisse sind in Tab. 4 dargestellt. Die dort angegebenen Temperaturen sind Werte, bei denen der Test durchgeführt wurde.

Tabelle 4

| Einzelsteinschlagergebnisse von überlackierten Elektrotauchlackfilmen | | | | |
|---|---|---|---|---|
| Bad | 3 | 4 | 5 (Vergleich) | 6 (Vergleich) |
| bei +23 °C: | | | | |
| Abschlagwert [1]<br>Durchschlagnote [2] | 2<br>0,5 | 1<br>0 | 3<br>1 | 6<br>0,5 |
| bei -20 °C: | | | | |
| Abschlagwert [1]<br>Durchschlagnote [2] | 3,8<br>2 | 5<br>1 | 7<br>2 | 18<br>0 |

[1] Abschlagwert bedeutet Abplatzung der Decklack- u./o. Füllerschicht von der Elektrotauchlackschicht, gemessen in mm² Es wird ein möglichst niedriger Wert angestrebt.

[2] Die Durchschlagnote beurteilt den Zerstörungsgrad der gesamten Lackschicht und ist ein Maß für die freigelegte, blanke Metallfläche, auch als Rostgrad bezeichnet. Note 0 bis 5. 0 = bester Wert, 5 = schlechtester Wert

Für die Beurteilung der Steinschlagresistenz ist es maßgeblich, daß die Abschlagwerte und gleichzeitig die Durchschlagnoten sowohl bei + 23 °C wie bei - 20 °C minimal sind.

6.5 Elektrotauchlackbad 7

Das Beispiel beschreibt einen schwarzpigmentierten Elektrotauchlack. Die Zubereitung erfolgt in der unter Punkt 6 beschriebenen Weise aus den Komponenten

406 Teile entionisiertes Wasser
1 Teil Essigsäure (10 %-ig)
496 Teile Dispersion 2
97 Teile Pigmentpaste B7.

Abscheidung und Prüfung der Filme:

| | Bad 7 | Vergleich[1] |
|---|---|---|
| Schichtdicke | 22 µm | - |
| Spannung | 300 V | - |
| Verlauf | 1-2 | - |
| Erichsen-Tiefung | 7-8 | 3-5 |
| Biegung am konischen Dorn (cm) | 0 | >6 |
| Reverse Impact (inch-pound) | 80 | <10 |
| GM-Gravelometer-test [2] | | |
| bei + 20 °C | 7 | 4 |
| bei - 18 °C | 7 | 4 |

[1] Schwarzer Elektrotauchlack entsprechend Stand der Technik (Cathodip® schwarz, FT 85-9480, BASF L + F)

[2] Steinschlagtest nach General Motors, Methode GME 60268, Note 0-10. 0 = schlechtester Wert 10 = bester Wert

6.6 Elektrotauchlackbäder 8 und 9

Die Beispiele beschreiben Elektrotauchlackbäder mit extrem niedrigem Gehalt an organischen Lösemitteln. Die Zubereitung der Bäder erfolgt in der vorstehend beschriebenen Weise.

|  | Bad 8 | Bad 9 |
|---|---|---|
| Entionisiertes Wasser | 2295 | 2295 |
| Essigsäure (10 %-ig) | 5 | 5 |
| Dispersion 1 | 2150 | 2150 |
| Pigmentpaste |  |  |
| - Gewichtsteile | 550 | 550 |
| - Typ | B5 | B6 (Vergleich) |

Bad 8 steht als Beispiel für einen erfindungsgemäßen Lack. Bad 9 stellt ein Vergleichsbeispiel dar und entspricht in seiner Zusammensetzung dem in der Patentanmeldung DE 3918511 beschriebenen Elektrotauchbad 2.

Eine nach 5-tägiger Alterung gezogene Lackprobe des Bades 9 weist als einziges Lösemittel Butylglykol in einer Menge von 0,5 Gewichts-% auf (gaschromatographisch bestimmt). Eine analoge Bestimmung für das Bad 8 ergibt 0,15 % Gewichts-% Butylglykol als einziges Lösemittel. Dies entspricht einem errechneten VOC-Wert von ca. 0,2 (Volatile organic compounds, inclusive Eisessig).

Abscheidung und Prüfung der Filme:

|  | Bad 8 | Bad 9 (Vergleich) |
|---|---|---|
| Schichtdicke ($\mu$m) | 24 | 25 |
| Spannung [1] (Volt) | 340 | 320 |
| Verlauf | 1-2 | 1-2 |
| Reverse Impact (inch pound) | 80 | 40 |
| Biegung am konischen Dorn (in cm) | 0 | 1 |

[1] Abscheidung mit Vorwiderstand 150 Ohm.

## Patentansprüche

1. Verfahren zum Beschichten elektrisch leitfähiger Substrate, bei dem
   (1) das elektrisch leitfähige Substrat in einen wäßrigen Elektrotauchlack getaucht wird
   (2) das Substrat als Kathode geschaltet wird
   (3) durch Gleichstrom ein Film auf dem Substrat abgeschieden wird
   (4) das beschichtete Substrat aus dem Elektrotauchlack entfernt wird und
   (5) der abgeschiedene Lackfilm eingebrannt wird,
   dadurch gekennzeichnet, daß der wäßrige Elektrotauchlack unter Verwendung einer Pigmentpaste hergestellt wird, die als Reibharz ein zumindest teilweise protoniertes Epoxid-Aminaddukt enthält, das erhältlich ist, indem
   (A) ein Glycidylether eines Polyphenols, der im statistischen Mittel mindestens eine Epoxidgruppe im Molekül enthält, oder ein Gemisch aus solchen Glycidylethern
   (B) ein Polyglycidylether eines Polyols, der im statistischen Mittel mehr als 1,0 Epoxidgruppen im Molekül enthält, oder ein Gemisch aus solchen Polyglycidylethern und
   (C) eine Verbindung, die eine primäre Aminogruppe im Molekül enthält, oder ein Gemisch aus solchen Verbindungen
   zu einem Epoxid-Aminaddukt umgesetzt werden, das zumindest teilweise protoniert wird, wobei die Komponenten (A) und (B) in einem Äquivalentverhältnis von 1,0 : 0;5 bis 1,0 : 8,0 eingesetzt werden und auf ein Äquivalent Epoxidgruppen aus (A) und (B) 0,3 bis 0,7 Mol der Komponente (C) eingesetzt werden.

2. Wäßriger Lack, dadurch gekennzeichnet, daß er ein zumindest teilweise protoniertes Epoxid-Aminaddukt enthält, das erhältlich ist, indem
   (A) ein Glycidylether eines Polyphenols, der im statistischen Mittel mindestens eine Epoxidgruppe im Molekül enthält, oder ein Gemisch aus solchen Glycidylethern

EP 0 505 445 B1

(B) ein Polyglycidylether eines Polyols, der im statistischen Mittel mehr als 1,0 Epoxidgruppen im Molekül enthält, oder ein Gemisch aus solchen Polyglycidylethern und

(C) eine Verbindung, die eine primäre Aminogruppe im Molekül enthält, oder ein Gemisch aus solchen Verbindungen

zu einem Epoxid-Aminaddukt umgesetzt werden, das zumindest teilweise protoniert wird, wobei die Komponenten (A) und (B) in einem Äquivalentverhältnis von 1,0 : 0;5 bis 1,0 : 8,0 eingesetzt werden und auf ein Äquivalent Epoxidgruppen aus (A) und (B) 0,3 bis 0,7 Mol der Komponente (C) eingesetzt werden.

3. Epoxid-Aminaddukt, dadurch gekennzeichnet, daß es erhältlich ist, indem

(A) ein Glycidylether eines Polyphenols, der im statistischen Mittel mindestens eine Epoxidgruppe im Molekül enthält, oder ein Gemisch aus solchen Glycidylethern

(B) ein Polyglycidylether eines Polyols, der im statistischen Mittel mehr als 1,0 Epoxidgruppen im Molekül enthält, oder ein Gemisch aus solchen Polyglycidylethern und

(C) eine Verbindung, die eine primäre Aminogruppe im Molekül enthält, oder ein Gemisch aus solchen Verbindungen

zu einem Epoxid-Aminaddukt umgesetzt werden, das zumindest teilweise protoniert wird, wobei die Komponenten (A) und (B) in einem Äquivalentverhältnis von 1,0 : 0;5 bis 1,0 : 8,0 eingesetzt werden und auf ein Äquivalent Epoxidgruppen aus (A) und (B) 0,3 bis 0,7 Mol der Komponente (C) eingesetzt werden.

4. Verfahren, Lack oder Epoxid-Aminaddukt nach einem der Ansprüche 1 bis 3, dadurch gekennzeichnet, daß (A), (B) und (C) in einem solchen stöchiometrischen Verhältnis miteinander umgesetzt werden, daß das erhaltene Epoxid-Aminaddukt epoxidgruppenfrei ist.

5. Verfahren, Lack oder Epoxid-Aminaddukte nach einem der Ansprüche 1 bis 4, dadurch gekennzeichnet, daß als Komponente (A) Gemische von Glycidylethern eingesetzt werden, die erhältlich sind, indem in Gegenwart eines Katalysators, der die Reaktion zwischen phenolischen Hydroxylgruppen und Epoxidgruppen katalysiert, aus

(a) einem Diglycidylether eines Polyphenols, vorzugsweise einem Diglycidylether von Bisphenol-A, mit einem zahlenmittleren Molekulargewicht von 260 bis 450, vorzugsweise 370 bis 380, oder einem Gemisch aus solchen Diglycidylethern

(b) einem gegebenenfalls substituiertem Monophenol, vorzugsweise einem Alkylphenol mit 1 bis 18, vorzugsweise 4 bis 12 Kohlenstoffatomen im Alkylrest, oder einer Mischung aus solchen Monophenolen und

(c) einem Diphenol, vorzugsweise Bisphenol-A und/oder einem Katalysator, der die Reaktion zwischen aliphatischen Hydroxylgruppen und Epoxidgruppen katalysiert

Glycidylether hergestellt werden, die ein zahlenmittleres Molekulargewicht von 980 bis 4000, vorzugsweise 980 bis 2000 aufweisen und die im statistischen Mittel pro Molekül 1,0 bis 3,0, vorzugsweise 1,2 bis 1,6 Epoxidgruppen und 0,25 bis 1,3, vorzugsweise 0,4 bis 0,9 von der Komponente (b) stammende Phenylethergruppen enthalten.

6. Verfahren, Lack oder Epoxid-Aminaddukt nach einem der Ansprüche 1 bis 5, dadurch gekennzeichnet, daß als Komponente (B) Polyglycidylether von Polyetherpolyolen, vorzugsweise Polyetherdiolen, mit einem zahlenmittleren Molekulargewicht von 300 bis 3000, vorzugsweise 400 bis 1200, eingesetzt werden.

7. Verfahren, Lack oder Epoxid-Aminaddukt nach einem der Ansprüche 1 bis 6, dadurch gekennzeichnet, daß die Komponenten (A) und (B) in einem Äquivalentverhältnis von 1,0:1,0 bis 1,0:2,0 eingesetzt werden.

8. Verfahren, Lack oder Epoxid-Aminaddukt nach einem der Ansprüche 1 bis 7, dadurch gekennzeichnet, daß auf ein Äquivalent Epoxidgruppen aus (A) und (B) 0,4 bis 0,6 Mol der Komponente (C) eingesetzt werden.

9. Verfahren, Lack oder Epoxid-Aminaddukt nach einem der Ansprüche 1 bis 8, dadurch gekennzeichnet, daß als Komponente (C) 2,2' Aminoethoxyethanol, N,N-Dimethylaminopropylamin, Hexylamin oder gegebenenfalls substituiertes Anilin eingesetzt wird.

18

EP 0 505 445 B1

**10.** Verwendung des Epoxid-Aminadduktes nach Anspruch 3 als Reibharz zur Herstellung von wäßrigen Pigmentpasten.

**Claims**

**1.** Process for the coating of electrically conducting substrates in which
(1) the electrically conducting substrate is immersed in an aqueous electrocoating paint,
(2) the substrate is connected as cathode,
(3) a film is deposited on the substrate using direct current,
(4) the coated substrate is removed from the electrocoating paint and
(5) the deposited paint film is baked,
characterized in that the aqueous electrocoating paint is produced by the use of a pigment paste which contains as grinding resin an at least partially protonated epoxideamine adduct which is obtainable by reacting
(A) a glycidyl ether of a polyphenol which contains on statistical average at least one epoxide group in the molecule, or a mixture of such glycidyl ethers,
(B) a polyglycidyl ether of a polyol which contains on statistical average more than 1.0 epoxide groups in the molecule, or a mixture of such polyglycidyl ethers and
(C) a compound which contains a primary amino group in the molecule or a mixture of such compounds
to form an epoxide-amine adduct which is at least partially protonated, the components (A) and (B) being used in an equivalent ratio of from 1.0:0.5 to 1.0:8.0 and 0.3 to 0.7 mol of the component (C) being used per equivalent of epoxide groups from (A) and (B).

**2.** Aqueous paint, characterized in that it contains an at least partially protonated epoxide-amine adduct which is obtainable by reacting
(A) a glycidyl ether of a polyphenol which contains on statistical average at least one epoxide group in the molecule, or a mixture of such glycidyl ethers,
(B) a polyglycidyl ether of a polyol which contains on statistical average more than 1.0 epoxide groups in the molecule, or a mixture of such polyglycidyl ethers and
(C) a compound which contains a primary amino group in the molecule or a mixture of such compounds
to form an epoxide-amine adduct which is at least partially protonated, the components (A) and (B) being used in an equivalent ratio of from 1.0:0.5 to 1.0:8.0 and 0.3 to 0.7 mol of the component (C) being used per equivalent of epoxide groups from (A) and (B).

**3.** Epoxide-amine adduct, characterized in that it is obtainable by reacting
(A) a glycidyl ether of a polyphenol which contains on statistical average at least one epoxide group in the molecule, or a mixture of such glycidyl ethers,
(B) a polyglycidyl ether of a polyol which contains on statistical average more than 1.0 epoxide groups in the molecule, or a mixture of such polyglycidyl ethers and
(C) a compound which contains a primary amino group in the molecule or a mixture of such compounds
to form an epoxide-amine adduct which is at least partially protonated, the components (A) and (B) being used in an equivalent ratio of from 1.0:0.5 to 1.0:8.0 and 0.3 to 0.7 mol of the component (C) being used per equivalent of epoxide groups from (A) and (B).

**4.** Process, paint or epoxide-amine adduct according to one of Claims 1 to 3, characterized in that (A), (B) and (C) are reacted with each other in such a stoichiometric ratio that the resultant epoxide-amine adduct is free from epoxide groups.

**5.** Process, paint or epoxide-amine adducts according to one of Claims 1 to 4, characterized in that mixtures of glycidyl ethers are used as the component (A) which are obtainable by preparing, in the presence of a catalyst which catalyses the reaction between phenolic hydroxyl groups and epoxide groups, from
(a) a diglycidyl ether of a polyphenol, preferably a diglycidyl ether of bisphenol A having a number average molecular weight of 260 to 450, preferably of 370 to 380, or a mixture of such diglycidyl ethers,

19

(b) an unsubstituted or substituted monophenol, preferably an alkyl phenol having 1 to 18, preferably 4 to 12 carbon atoms in the alkyl radical, or a mixture of such monophenols, and

(c) a diphenol, preferably bisphenol A and/or a catalyst which catalyses the reaction between secondary hydroxyl groups and epoxide groups

glycidyl ethers which have a number average molecular weight of 980 to 4,000, preferably 980 to 2,000 and contain on statistical average 1.0 to 3.0, preferably 1.2 to 1.6 epoxide groups and 0.25 to 1.3, preferably 0.4 to 0.9 phenyl ether groups derived from the component (b) per molecule.

6. Process, paint or epoxide-amine adduct according to one of Claims 1 to 5, characterized in that polyglycidyl ethers of polyether polyols, preferably polyether diols, having a number molecular weight of 300 to 3,000, preferably 400 to 1,200, are used as the component (B).

7. Process, paint or epoxide-amine adduct according to one of Claims 1 to 6, characterized in that the components (A) and (B) are used in an equivalent ratio of 1.0:1.0 to 1.0:2.0.

8. Process, paint or epoxide-amine adduct according to one of Claims 1 to 7, characterized in that 0.4 to 0.6 mol of the component (C) are used per equivalent of epoxide groups from (A) and (B).

9. Process, paint or epoxide-amine adduct according to one of Claims 1 to 8, characterized in that 2,2'-aminoethoxyethanol, N,N-dimethylaminopropylamine, hexylamine or unsubstituted or substituted aniline are used as the component (C).

10. Use of the epoxide-amine adduct according to Claim 3 as a grinding resin for the preparation of aqueous pigment pastes.

**Revendications**

1. Procédé de revêtement de substrat conducteur de l'électricité, dans lequel

(1) le substrat conducteur de l'électricité est immergé dans un bain d'électrodéposition aqueux,

(2) le substrat est branché en tant que cathode,

(3) un feuil est déposé sur le substrat avec un courant direct,

(4) le substrat revêtu est retire de la peinture d'électrodéposition, et

(5) le feuil de peinture déposé est cuit,

caractérisé en ce que la peinture aqueuse d'électrodéposition est produite à l'aide d'une pâte de pigments qui contient, comme résine de broyage, un composé d'addition époxyde-amine au moins partiellement protoné que l'on peint obtenir par réaction

(A) d'un éther glycidylique d'un polyphénol qui contient, en moyenne statistique, au moins un groupe époxyde dans la molécule, ou d'un mélange de tels éthers glycidyliques,

(B) d'un éther polyglycidylique d'un polyol, qui contient, en moyenne statistique, plus de 1,0 groupe époxyde dans la molécule, ou d'un mélange de tels éthers polyglycidyliques, et

(C) d'un composé qui contient un groupe amino primaire dans la molécule ou d'un mélange de tels composés

pour former un composé d'addition époxyde-amine qui est au moins partiellement protoné, les constituants (A) et (B) étant utilisés dans un rapport d'équivalents de 1,0:0,5 à 1,0:8,0 et une quantité de 0,3 à 0,7 mole du constituant (C) étant utilisée par équivalent de groupes époxyde de (A) et (B).

2. Peinture aqueuse, caractérisée en ce qu'elle contient au moins un compose d'addition époxyde-amine au moins partiellement protoné que l'on peut obtenir par réaction

(A) d'un éther glycidylique d'un polyphénol qui contient, en moyenne statistique, au moins un groupe époxyde dans la molécule, ou d'un mélange de tels éthers glycidyliques,

(B) d'un éther polyglycidylique d'un polyol, qui contient, en moyenne statistique, plus de 1,0 groupe époxyde dans la molécule, ou d'un mélange de tels éthers polyglycidyliques, et

(C) d'un composé qui contient un groupe amino primaire dans la molécule ou d'un mélange de tels composés

pour former un composé d'addition époxyde-amine qui est au moins partiellement protoné, les constituants (A) et (B) étant utilisés dans un rapport d'équivalents de 1,0:0,5 à 1,0:8,0 et inne quantité de 0,3 à 0,7 mole du constituant (C) étant utilisée par équivalent de groupes époxyde de (A) et (B).

3. Compose d'addition époxyde-amine, caractérisé en ce que l'on peint l'obtenir par reaction

(A) d'un éther glycidylique d'un polyphénol qui contient, en moyenne statistique, au moins un groupe époxyde dans la molécule, ou d'un mélange de tels éthers glycidyliques,

(B) d'un éther polyglycidylique d'un polyol, qui contient, en moyenne statistique, plus de 1,0 groupe époxyde dans la molécule, ou d'un mélange de tels éthers polyglycidyliques, et

(C) d'un composé qui contient un groupe amino primaire dans la molécule ou d'un mélange de tels composés

pour former un composé d'addition époxyde-amine qui est au moins partiellement protoné, les constituants (A) et (B) étant utilisés dans un rapport d'équivalents de 1,0:0,5 à 1,0:8,0 et inne quantité de 0,3 à 0,7 mole du constituant (C) étant utilisée par équivalent de groupes époxyde de (A) et (B).

4. Procédé, peinture ou composé d'addition époxyde-amine selon l'une quelconque des revendications 1 à 3, caractérisé en ce que l'on fait réagir (A), (B) et (C) les uns avec les autres, dans un rapport stoechiométrique tel que le composé d'addition époxyde-amine résultant soit dépourvu de groupe époxyde.

5. Procédé, peinture ou composes d'addition époxyde-amine selon l'une quelconque des revendications 1 à 4, caractérisé en ce que l'on utilise comme constituant (A) des mélanges d'éthers glycidyliques que l'on peut obtenir par préparation, en présence d'un catalyseur qui catalyse la réaction entre les groupes hydroxyle phénoliques, et des groupes époxyde, de

(a) d'un éther diglycidylique d'un polyphénol, de préférence d'un éther diglycidylique de bisphénol A ayant une masse moléculaire moyenne en nombre de 260 à 450, de préférence de 370 à 380, ou d'un mélange de ces éthers diglycidyliques,

(b) d'un monophénol non substitué ou substitué, de préférence d'un alkylphénol possédant 1 à 18, de préférence 4 à 12 atomes de carbone dans le radical alkyle, ou d'un mélange de ces monophénols et

(c) d'un diphénol, de préférence le bisphénol A et/ou d'un catalyseur qui catalyse la reaction entre des groupes hydroxyle secondaires et des groupes époxyde,

ces éthers glycidyliques ayant une masse moléculaire en nombre de 980 à 4 000, de préférence de 980 à 2 000, et contenant, en moyenne statistique, 1,0 à 3,0, de préférence de 1,2 à 1,6, groupes époxyde et 0,25 à 1,3, de préférence de 0,4 à 0,9, groupes éther phénylique dérivés du constituant (b) par molécule.

6. Procédé, peinture ou composé d'addition époxyde-amine selon l'une des revendications 1 à 5, caractérisé en ce que l'on utilise, comme constituant (B) des éthers polydiglycidyliques de polyéther-polyols, de préférence de polyéther-diols, ayant inne masse moléculaire en nombre de 300 à 3 000, de préférence de 400 à 1 200.

7. Procédé, peinture ou composé d'addition époxyde-amine selon l'une des revendications 1 à 6, caractérisé en ce que l'on utilise les constituants (A) et (B) dans un rapport d'équivalents de 1,0:1,0 à 1,0:2,0.

8. Procédé, peinture ou compose d'addition époxyde-amine selon l'une des revendications 1 à 7, caractérisé en ce que l'on utilise 0,4 à 0,6 mole de constituant (C) par équivalents de groupes époxyde de (A) et (B).

9. Procédé, peinture ou composé d'addition époxyde-amine selon l'une des revendications 1 à 8, caractérisé en ce que l'on utilise, comme constituant (C), le 2,2'-aminoéthoxyéthanol, la N,N-diméthylaminopropylamine, l'hexylamine ou une aniline non substituée ou substituée.

10. Utilisation du composé d'addition époxyde-amine selon la revendication 3 comme résine de broyage pour la préparation de pâtes de pigments aqueuses.